# EUROPÄISCHE PATENTSCHRIFT

(11) **EP 2 279 124 B1**
(45) Veröffentlichungstag und Bekanntmachung des Hinweises auf die Patenterteilung: **28.09.2011**
(21) Anmeldenummer: 09730678.1
(22) Anmeldetag: 25.03.2009
(51) Int. Cl.: B65B 59/00, B65B 65/02, F16H 19/06

(54) **VERSTELLVORRICHTUNG**
ADJUSTING DEVICE
DISPOSITIF DE POSITIONNEMENT

(30) Priorität: 11.04.2008 DE 102008018659
(43) Veröffentlichungstag der Anmeldung: 02.02.2011
(73) Patentinhaber: KHS GmbH, 44143 Dortmund (DE)
(72) Erfinder: WILLEMSEN, Stefan, 47652 Weeze (DE); JOERISSEN, Michael, 47551 Bedburg-Hau (DE)
(86) Internationale Anmeldenummer: PCT/EP2009/002151
(87) Internationale Veröffentlichungsnummer: WO 2009/124656

(56) Entgegenhaltungen:
- EP-A- 0 023 552
- EP-A- 0 142 007
- DE-C- 261 378
- US-A- 3 894 380

## Beschreibung

Die vorliegende Erfindung betrifft eine Verstellvorrichtung gemäß dem Oberbegriff des Anspruches 1. Ein erfindungsgemäßes Verfahren ist Gegenstand des Anspruches 6. Ein Verwendung einer erfindungsgemäßen Verstellvorrichtung ist Gegenstand des Anspruches 12. Vorteilhafte Weiterbildungen sind in den Unteransprüchen angegeben.

Anlagen zum Behandeln und/oder Ver- und/oder Bearbeiten von Packmitteln sind in unterschiedlichster Form bekannt, beispielsweise auch als Reinigungs- und/oder Füll- und/oder Verschließ- und/oder Etikettier- und/oder Verpackungs- und/oder Palletieranlagen.

Packmittel im Sinne der Erfindung sind generell solche zur Aufnahme von Pack- oder Füllgut, beispielsweise Behälter unterschiedlichster Art, wie z. B. Dosen, Flaschen usw. Packmittel im Sinne der Erfindung sind weiterhin auch Packmittelgruppen oder -gebinde, beispielsweise Behältergruppen oder Gebinde aus Behälter unterschiedlichster Art.

Unter Packmitteln im Sinne der Erfindung sind auch ungefüllte oder gefüllte Behälter zu verstehen.

Transportstrecke bedeutet im Sinne der Erfindung diejenige Strecke, auf der die Packmittel durch die betreffende Anlage bewegt werden. Zur Transportstrecke gehören somit alle Transporteur beliebiger Ausbildung der jeweiligen Anlage und alle die Packmittel transportierenden Elemente dieser Anlage, d.h. u.a. auch die insbesondere bei Anlagen zum Behandeln von Behältern üblichen Transportsterne beliebiger Ausbildung und deren zugeordnete Elemente (insbesondere Führungsbögen usw.), aber auch umlaufende Transportelemente oder Rotoren von Behandlungsanlagen und/oder Ver- und/oder Bearbeitungsanlagen und/oder Behandlungsanlagen für Packmittel unterschiedlichster Art. Selbstverständlich sind Transportstrecken im Sinne der Erfindung auch andere Transporteure, zum Zu- und Abführen der Packmittel in bzw. aus einer Anlage sowie transportieren der Packmittel zwischen Behandlungsmaschinen einer Anlage.

Speziell in der Getränkeindustrie werden häufig auf einer Anlage Behälter mit unterschiedlichem Format verarbeitet, d.h. Behälter mit unterschiedlichen äußeren Abmessungen, und/oder Formen und/oder unterschiedlicher Art usw. Zusätzlich werden diese unterschiedlichen Behälter auch in unterschiedlichen Verpackungs- oder Gebindearten bzw. -formaten angeboten. Zur Anpassung einer Anlage an diese unterschiedlichen Formate von Behältern, beispielsweise Flaschen, Dosen oder dgl., aber auch zur Anpassung an unterschiedliche Gebindeformate ist es üblich, formatabhängige, mit den Behältern oder Gebinden zusammenwirkende Funktionselemente bzw. Formatteile (z.B. Führungsteile) komplett auszutauschen.

Weiterhin ist es üblich und erforderlich, die mit den Behältern oder Gebinden zusammenwirkenden, formatabhängigen Funktionselemente beispielsweise bei einem Formatwechsel formatgerecht einzustellen. Diese Einstellung erfolgt in vielen Fällen vom Bedienungspersonal von Hand, wobei an einer Vielzahl von Einstellpositionen die Einstellungen manuell durchgeführt werden.

Dabei sind die formatabhänglgen Funktionselemente, beispielsweise seitlich von den Packmitteln angeordnete Seitenführungen, in der Regel an einer Führungsstange gehalten. Diese Führungsstange wiederum Ist beweglich in einer ortsfest an dem Maschinengestell angeordneten Aufnahme gehalten.

Zur Positionierung der Funktionselemente, wird nun die Führungsstange so weit gegenüber der ortsfesten Aufnahme verschoben, bis die Funktionselemente die neue Soll-Position eingenommen haben. Ist die neue Soll-Position erreicht, so wird die Führungsstange Innerhalb der Aufnahme festgelegt, beispielsweise durch eine, innerhalb der Aufnahme angeordnete Klemmvorrichtung. Zur genauen und auch reproduzierbaren Einstellung der Soll-Position sind auf der Oberseite der Führungsstangen häufig Markierungen, bzw. Maßangaben angebracht. Bekannt ist es speziell auch (EP -A- 0 142 007) die Einstellung über Gewindespindeln vorzunehmen.

Dabei ist es von Bedeutung, dass die Führungsstangen oder Gewindespindeln aufgrund der notwendigen Verstellbereiche der Funktionselemente eine erhebliche Länge aufweisen müssen, wodurch diese Führungsstangen oder Gewindespindeln häufig weit in den Bereich hineinragen, in dem sich das Bedienungspersonal zur Bedienung der Maschine aufhalten und ungehindert frei bewegen können muss.

Nachteilig daran ist Insbesondere die sich durch diesen Stand der Technik ergebende Unfallgefahr. Ebenfalls ist auch die sich durch die Führungsstangen oder Gewindespindeln ergebende Einschränkung der Zugänglichkeit der Maschine von großem Nachteil.

Bekannt ist weiterhin eine Vorrichtung zur Erzeugung einer hin- und hergehenden Bewegung eines Schlittens, und zwar mit einem doppelten Hub eines die Bewegung erzeugenden Kurbelantriebs (DE 261378 C). Der Schlitten ist dabei auf einer ortsfesten geradlinigen Schlittenführung geführt, die wenigstens eine dem doppelten Hub entsprechende Länge aufweist, und mit einem Riemen verbunden, der als geschlossene Schlaufe über Riemenräder an einem durch den Kurbelantrieb bewegten Hilfsschlitten geführt ist. Der Riemen ist weiterhin mit einer ortsfesten Grundplatte verbunden, so dass jeder Hub des Kurbelantriebs den doppelten Hub des Schlittens erzeugt.

Aufgabe der Erfindung ist es, eine Verstellvorrichtung und eine Verwendung einer solchen Verstellvorrichtung aufzuzeigen, welche die vorgenannten Nachteile vermeiden und eine einfache Formateinstellung oder -umstellung ermöglichen, wobei lange Führungsstangen und die mit ihnen verbundenen Nachteile vermieden werden.

Zur Lösung dieser Aufgabe ist eine Verstellvorrichtung entsprechend dem Patentanspruch 1 ausgebildet. Ein Verfahren ist Gegenstand des Anspruches 6. Eine Verwendung einer solchen Verstellvorrichtung ist Gegenstand des Patentanspruches 11.

Weiterbildungen der Erfindung sind Gegenstand der Unteransprüche,

Die Erfindung ermöglicht eine schnelle, insbesondere aber auch vereinfachte und sichere Formateinstellung oder -umstellung.

Weiterbildungen, Vorteile und Anwendungsmögllchkeken der Erfindung ergeben sich auch aus der nachfolgenden Beschreibung von Ausführungsbeispielen und aus der Zeichnung. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren, die in sehr vereinfachter Darstellung eine erfindungsgemäße Verstellvorrichtung zeigen näher erläutert.

In den Figuren ist 1 eine erfindungsgemäße Verstellvorrichtung. Bezugszeichen 2 kennzeichnet eine ortsfest am Maschinengestell angeordnete Grundplatte. Auf dieser Grundplatte 2 ist eine kastenförmige Aufnahme 3 gehalten. Innerhalb dieser Aufnahme 3 befinden sich die Lagerungen für zwei Achsen 4, welche jeweils eine Umlenkrolle 5 aufnehmen. Die Umlenkrollen 5 werden von einem flexiblen Element, beispielsweise einem Riemen 6 oder aber auch einer geschlossenen Riemenschlaufe umschlossen. Mit einer ersten Fixierung 7 ist der Riemen 6 fest mit der Grundplatte 2 verbunden. Mit einer zweiten Fixierung 8 ist ein Stempel 9 mit dem Riemen 6 fest verbunden. Der Stempel 9 wiederum ist innerhalb der Aufnahme 3 beweglich gelagert.

An dem Stempel 9, beispielsweise an seiner Vorderkante 10 können die zu verstellenden Funktionselemente befestigt werden. Ebenfalls kann die Vorderkante 10 des Stempels 9 selber ein Funktionselement sein, oder aber auch ein Bestandteil eines solchen Funktionselementes darstellen.

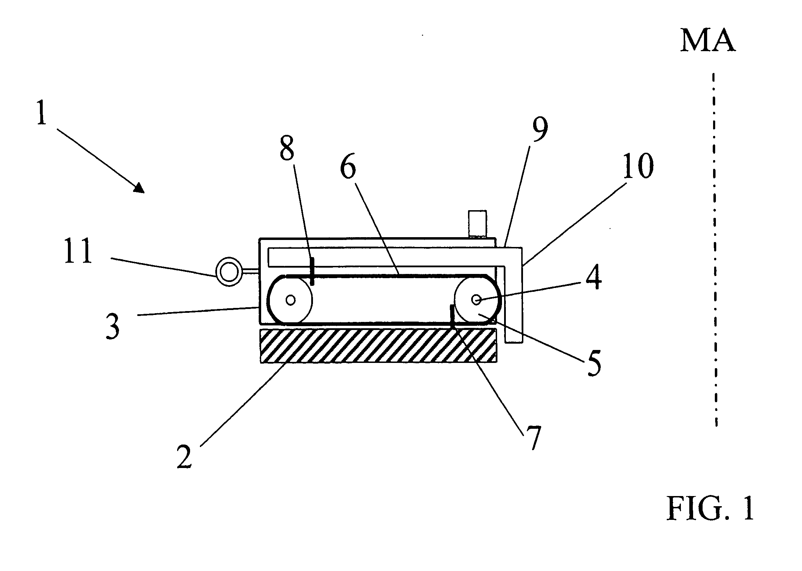

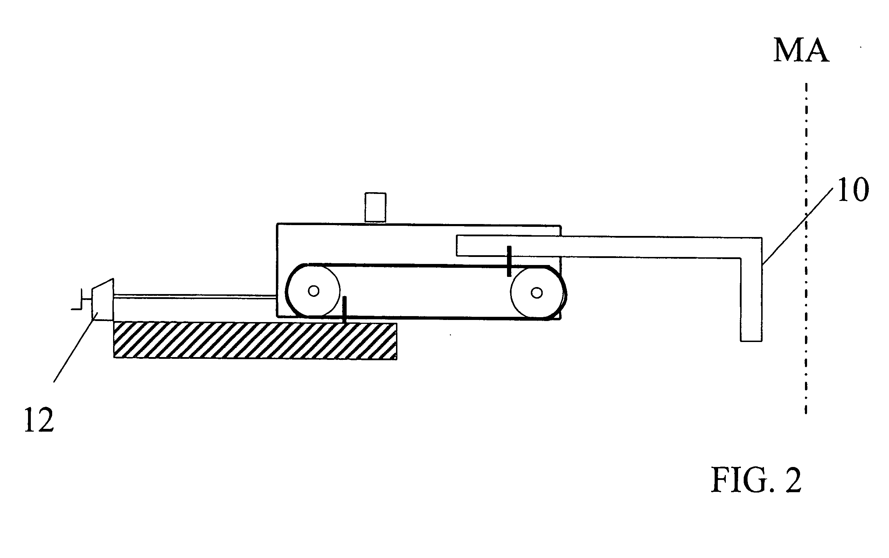

Figur 1 zeigt die erfindungsgemäße Verstellvorrichtung in einer ersten Position, in welcher die Verstellvorrichtung die kleinste Baulänge aufweist, die Vorderkante 10 des Stempels 9 also weit wie möglich von der Mittelachse MA der Behandlungsmaschine, der Transportebene der Packmittel oder eines Transporteurs entfernt ist.

Soll nun der Stempel 9, bzw. seine Vorderkante 10 weiter in Richtung der Mittelachse MA verstellt werden, so wird beispielsweise die Aufnahme 3 durch das Bedienungspersonal mittels eines Handgriffes 11 in Richtung der Mittelachse MA verschoben.

Bei diesem Vorgang werden nun durch die besonders vorteilhafte Gestaltung der erfindungsgemäßen Verstellvorrichtung, zwei sich überlagernde Bewegungen erzeugt, welche einen besonders großen Verstellweg des Stempels 9 gegenüber der Grundplatte 2 bewirken.

Zur Verdeutlichung der Wirkungsweise wird zunächst die zweite Fixierung 8 betrachtet, wobei zunächst angenommen wird, dass der Riemen 6 nicht durch die erste Fixierung 7 mit der Grundplatte 2 verbunden ist.

Unter dieser Annahme, dass der Riemen 6 nicht durch die erste Fixierung 7 mit der Grundplatte 2 verbunden ist, folgt die zweite Fixierung 8 genau den Bewegungen der Aufnahme 3. Da die Achsen 4 ebenfalls innerhalb der Aufnahme 3 gelagert sind, folgen auch diese und auch die Umlenkrollen 5 direkt den Bewegungen der Aufnahme 3.

ist aber nun, wie erfindungsgemäß vorgesehen, der Reimen 6 über die erste Fixierung 7 mit der Grundplatte 2 verbunden, so bewirkt die Bewegung der Aufnahme 3 gegenüber der Grundplatte 2 zusätzlich eine Relativbewegung der zweiten Fixierung 8 relativ zur Aufnahme 3.

Da aber der Stempel 9 wiederum fest an der zweiten Fixierung 8 befestigt ist, folgt der Stempel 9 genau den Bewegungen der zweiten Fixierung 8. Dabei setzt sich die Bewegung der zweiten Fixierung 8 relativ zur Grundplatte 2 aus der Bewegung der Aufnahme 3 relativ zur Grundplatte 2 und aus der Bewegung des Riemens 6 relativ zur Aufnahme 3 zusammen.

Schließlich ergibt sich so für den Stempel 9 ein Verstellweg, der dem doppelten Verstellweg der Aufnahme 3 entspricht.

Im Ergebnis baut die vorgeschlagene Verstellvorrichtung, bei gleichem Verstellweg deutlich kürzer als die bekannten Verstellvorrichtungen, wodurch die Nachteile des Standes der Technik vermieden werden.

Weiterhin ist zur weiteren Vereinfachung der Einstellarbeiten vorgesehen, den Handgriff 11 durch andere Vorrichtungen zu ersetzen.

Es ist vorgesehen, den Handgriff 11 durch eine Positioniereinheit 12 zu ersetzen.

Bei dieser Positioniereinheit 12 kann es sich beispielsweise um eine Gewindeverstelleinheit mit einer Verstellspindel mit einem Bewegungsgewinde handeln, wobei die Gewindeverstelleinheit vorzugsweise mit einem Handrad und einer Anzeige für die aktuelle Position des zu verstellenden Elementes ausgestattet ist.

Weiterhin kann es sich bei der Positioniereinheit 12 auch um einen motorischen Antrieb, beispielsweise um einen elektromotorischen Antrieb mittels eines geregelten Servo-Motors handeln.

Auf jeden Fall wird die Verstellung der Aufnahme 3 relativ zur Grundplatte 2 beschleunigt und reproduzierbarer.

### Bezugszeichen

- 1: Verstellvorrichtung
- 2: Grundplatte
- 3: Aufnahme
- 4: Achsen
- 5: Umlenkrolle
- 6: Riemen
- 7: erste Fixierung
- 8: zweite Fixierung
- 9: Stempel
- 10: Vorderkante
- 11: Handgriff
- 12: Positioniereinheit

- MA: Mittelachse

## Patentansprüche

1. Verstellvorrichtung (1) zur Verstellung von formatabhängigen Funktionselementen, insbesondere zur Anwendung in Maschinen zur Behandlung von Packmitteln, mit einer ortsfesten Grundplatte (2), einer Aufnahme (3) und einem Stempel (9), **dadurch gekennzeichnet, dass** Mittel vorgesehen sind, welche den in der Ausnahme (3) geführten Stempel (9) relativ zu der Aufnahme (3) in deren Bewegungsrichtung bewegen, wenn die Aufnahme (3) relativ zu der ortsfesten Grundplatte (2) bewegt wird.

2. Verstellvorrichtung (1) nach Anspruch 1, **dadurch gekennzeichnet, dass** die Mittel zumindest ein flexibles Element, welches an der ortsfesten Grundplatte (2) befestigt ist und mindestens eine Umlenkrolle (5), welche an der Aufnahme (3) befestigt ist, beinhalten.

3. Verstellvorrichtung (1) nach einem der vorhergehenden Ansprüche, **dadurch gekennzeichnet, dass** an dem Stempel (9) die formatabhängigen Funktionselemente befestigt sind.

4. Verstellvorrichtung (1) nach einem der vorhergehenden Ansprüche, **dadurch gekennzeichnet, dass** zur Bewegung der Aufnahme (3) relativ zur Grundplatte (2) eine Positioniereinheit (12) vorgesehen ist.

5. Verstellvorrichtung (1) nach Anspruch 4, **dadurch gekennzeichnet, dass** es sich bei der Positiontereinheit (12) um einen motorischen Antrieb oder um eine Gewindeverstelleinheit handelt.

6. Verfahren zur Verstellung eines formatabhängigen Funktionselementes an einem zweiten Elemente relativ zu einem ortsfesten Element, insbesondere bei Maschinen zur Behandlung von Packmitteln, **dadurch gekennzeichnet, dass** ein erstes Element um eine erste Wegstrecke relativ zu dem ortsfesten Element bewegt wird,
wodurch zwangsweise das, mit dem ersten Element verbundene und an diesem geführte zweite Element relativ zu dem ersten Element um eine zweite Wegstrecke in die Bewegungsrichtung des ersten Elements bewegt wird.

7. Verfahren nach Anspruch 6, **dadurch gekennzeichnet, dass** die zweite Wegstrecke von der ersten Wegstrecke abhängig ist

8. Verfahren nach Anspruch 7, **dadurch gekennzeichnet, dass** die zweite Wegstrecke linear von der ersten Wegstrecke abhängig ist.

9. Verfahren nach einem der vorhergehenden Ansprüche 6 bis 8, **dadurch gekennzeichnet, dass** sich der Gesamtweg des zweiten Elements gegenüber dem ortsfesten Element aus der ersten Wegstrecke und der zweiten Wegstrecke zusammen setzt.

10. Verfahren nach einem der vorhergehenden Ansprüche, **dadurch gekennzeichnet, dass** der Gesamtweg des zweiten Elements gegenüber dem ortsfesten Element doppelt so groß ist wie die erste Wegstrecke.

11. Verwendung einer Verstellvorrichtung (1) in den Packmittelbehandlungsanlagen der Getränkeindustrie

## Claims

1. An adjusting device (1) for adjusting format-dependent functional elements, in particular for use in machines for processing packaging, having a stationary baseplate (2), a receptacle (3) and a ram (9), **characterised in that** means are provided which move the ram (9) guided in the receptacle (3) relative to the receptacle (3) in its direction of movement when the receptacle (3) is moved relative to the stationary baseplate (2).

2. An adjusting device (1) according to Claim 1, **characterised in that** the means contain at least one flexible element which is attached to the stationary baseplate (2) and at least one guide roller (5) which is attached to the receptacle (3).

3. An adjusting device (1) according to any one of the preceding claims, **characterised in that** the format-dependent functional elements are attached to the ram (9).

4. An adjusting device (1) according to any one of the preceding claims, **characterised in that** a positioning unit (12) is provided for moving the receptacle (3) relative to the baseplate (2).

5. An adjusting device (1) according to Claim 4, **characterised in that** the positioning unit (12) is a motorised drive or a thread adjuster unit.

6. A method for adjusting a format-dependent functional element on a second element relative to a static element, in particular in machines for processing packaging, **characterised in that** a first element is moved by a first distance relative to the static element, whereby the second element connected to the first element and guided on it is forced to move relative to the first element by a second distance in the direction of movement of the first element.

7. A method according to Claim 6, **characterised in that** the second distance is dependent on the first distance.

8. A method according to Claim 7, **characterised in that** the second distance is linearly dependent on the first distance.

9. A method according to any one of the preceding claims 6 to 8, **characterised in that** the total travel of the second element relative to the static element is composed of the first distance and the second distance.

10. A method according to any one of the preceding claims, **characterised in that** the total travel of the second element relative to the static element is twice as great as the first distance.

11. The use of an adjusting device (1) in the packaging processing systems of the beverages industry.

## Revendications

1. Dispositif de réglage (1) pour le réglage d'éléments fonctionnels qui dépendent du format, en particulier pour l'application dans des machines de traitement de matériaux d'emballage, avec une plaque de base (2) fixe, un logement (3) et un poinçon (9), **caractérisé en ce que** des moyens sont prévus, lesquels déplacent le poinçon (9) guidé dans le logement (3) par rapport au logement (3) dans son sens de déplacement si le logement (3) est déplacé par rapport à la plaque de base fixe (2).

2. Dispositif de réglage (1) selon la revendication 1, **caractérisé en ce que** les moyens contiennent au moins un élément flexible qui est fixé sur la plaque de base fixe (2) et au moins une poulie de renvoi (5) qui est fixée sur le logement (3).

3. Dispositif de réglage (1) selon l'une quelconque des revendications précédentes, **caractérisé en ce que** les éléments fonctionnels qui dépendent du format sont fixés sur le poinçon (9).

4. Dispositif de réglage (1) selon l'une quelconque des revendications précédentes, **caractérisé en ce qu'**une unité de positionnement (12) est prévue pour le déplacement du logement (3) par rapport à la plaque de base (2).

5. Dispositif de réglage (1) selon la revendication 4, **caractérisé en ce qu'**il s'agit pour l'unité de positionnement (12) d'un entraînement motorisé ou d'une unité de réglage par filetage.

6. Procédé de réglage d'un élément fonctionnel qui dépend du format sur un second élément par rapport à un élément fixe, en particulier pour des machines de traitement de matériaux d'emballage, **caractérisé en ce qu'**un premier élément est déplacé d'une première distance par rapport à l'élément fixe, ce qui déplace obligatoirement le second élément relié au premier élément et guidé sur celui-ci par rapport au premier élément d'une seconde distance dans le sens de déplacement du premier élément.

7. Procédé selon la revendication 6, **caractérisé en ce que** la seconde distance dépend de la première distance.

8. Procédé selon la revendication 7, **caractérisé en ce que** la seconde distance dépend linéairement de la première distance.

9. Procédé selon l'une quelconque des revendications 6 à 8, **caractérisé en ce que** la course entière du second élément vis-à-vis de l'élément fixe se compose de la première distance et de la seconde distance.

10. Procédé selon l'une quelconque des revendications précédentes, **caractérisé en ce que** la course entière du second élément vis-à-vis de l'élément fixe est deux fois plus grande que la première distance.

11. Utilisation d'un dispositif de réglage (1) dans les installations de traitement de matériaux d'emballage de l'industrie des boissons.
